# EUROPÄISCHE PATENTSCHRIFT

(11) **EP 3 458 693 B1**
(45) Veröffentlichungstag und Bekanntmachung des Hinweises auf die Patenterteilung: **17.02.2021**
(21) Anmeldenummer: 17723375.6
(22) Anmeldetag: 12.05.2017
(51) Int. Cl.: F02B 31/00, F02B 71/00, F01B 11/00, F02B 63/04

(54) **FREIKOLBENVORRICHTUNG UND VERFAHREN ZUM BETREIBEN EINER FREIKOLBENVORRICHTUNG**
FREE PISTON DEVICE AND METHOD FOR OPERATING A FREE PISTON DEVICE
DISPOSITIF À PISTON LIBRE ET PROCÉDÉ POUR FAIRE FONCTIONNER UN DISPOSITIF À PISTON LIBRE

(30) Priorität: 17.05.2016 DE 102016109029
(43) Veröffentlichungstag der Anmeldung: 27.03.2019
(73) Patentinhaber: Deutsches Zentrum für Luft- und Raumfahrt e.V., 51147 Köln (DE)
(72) Erfinder: SCHNEIDER, Stephan, 70176 Stuttgart (DE)
(74) Vertreter: Hoeger, Stellrecht & Partner Patentanwälte mbB
(86) Internationale Anmeldenummer: PCT/EP2017/061510
(87) Internationale Veröffentlichungsnummer: WO 2017/198576

(56) Entgegenhaltungen:
- WO-A1-2012/158756
- CH-A- 188 403
- DE-A1- 3 047 138
- DE-A1-102005 006 340
- US-A- 4 048 970

## Beschreibung

Die Erfindung betrifft eine Freikolbenvorrichtung, umfassend eine Kolbenaufnahme, in der mindestens eine Kolbeneinrichtung mit einem Kolben längs einer Achse hin- und herbeweglich angeordnet ist, wobei die Kolbenaufnahme einen von einer Wandung begrenzten Brennraum umfasst oder bildet, in der mindestens eine Einlassöffnung für die Zufuhr von Frischgas und, in axialer Richtung davon beabstandet, mindestens eine Auslassöffnung für die Abfuhr von Abgas gebildet sind.

Außerdem betrifft die Erfindung ein Verfahren zum Betreiben einer derartigen Freikolbenvorrichtung .

Bei einer derartigen, üblicherweise im Zweitaktverfahren betriebenen, Freikolbenvorrichtung oszilliert die Kolbeneinrichtung in der Kolbenaufnahme hin und her. Bei der Verbrennung eines Gas-Brennstoff-Gemisches im Brennraum wird der Kolben von einem oberen Totpunkt zu einem unteren Totpunkt bewegt. Bei Einnahme des unteren Totpunktes sind die mindestens eine Einlassöffnung und die mindestens eine Auslassöffnung geöffnet, und Frischgas kann in den Brennraum einströmen. Abgas kann aus dem Brennraum abgeführt werden. Der Kolben kann als Ventilkörper wirken, mit dem die mindestens eine Einlassöffnung oder die mindestens eine Auslassöffnung bei Einnahme des unteren Totpunktes zumindest teilweise freigegeben wird und bei der Aufwärtsbewegung des Kolbens wieder versperrt wird. Die Aufwärtsbewegung des Kolbens erfolgt unter der Wirkung einer Rückfedereinrichtung der Freikolbenvorrichtung für die Kolbeneinrichtung. Die Rückfedereinrichtung umfasst beispielsweise eine Gasfeder mit einem über die Kolbeneinrichtung komprimierbaren Gas. Bei einer Expansion des Gases wird die Kolbeneinrichtung in Gegenrichtung für die Aufwärtsbewegung des Kolbens bewegt. Alternativ oder ergänzend kann eine mechanische Rückfedereinrichtung vorgesehen sein.

Unter "Frischgas" wird vorliegend ein Gas oder Gasgemisch (insbesondere Luft) für die innere Verbrennung im Brennraum verstanden, wobei dem Gas auch ein Brennstoff beigemischt sein kann. "Frischgas" kann vorliegend daher auch ein Gas-Brennstoff-Gemisch bezeichnen, das über die mindestens eine Eintrittsöffnung in den Brennraum einströmen kann. "Abgas" bezeichnet vorliegend ein Verbrennungsprodukt der inneren Verbrennung.

Bei der gattungsgemäßen Freikolbenvorrichtung entsteht durch die axial voneinander beabstandeten Öffnungen für den Einlass und den Auslass ein Spülgefälle, und zum Ladungswechsel wird der Brennraum in axialer Richtung gespült (sogenannte "Längsspülung"). "Axial" und "radial" beziehen sich vorliegend auf die von der Kolbenaufnahme definierte Achse, längs der die Kolbeneinrichtung bewegt wird.

Freikolbenvorrichtungen können im Selbstzündungsbetrieb oder mit Fremdzündung betrieben werden, wobei eine Zündeinrichtung am Brennraum angeordnet ist. Es erweist sich in der Praxis als vorteilhaft, die Einströmverhältnisse des Frischgases in den Brennraum im Hinblick auf das jeweilige Gemisch und den Fremdzündungs- oder den Selbstzündungsbetrieb zu optimieren. Bekannt ist es beispielsweise, bei Freikolbenvorrichtungen für den Selbstzündungsbetrieb Frischgas radial bezüglich der Achse einzuströmen. Es bildet sich im Brennraum eine schraubenförmige Bewegung der Strömung aus. Eine derartige Strömung erweist sich jedoch für den Fremdzündungsbetrieb als weniger geeignet.

Die DE 30 47 138 A1 und die DE 10 2005 006 340 A1 beschreiben Freikolbenvorrichtungen mit in Gegenkolbenbauweise angeordneten Kolben und Längsspülung des Zylinderraums.

Aufgabe der vorliegenden Erfindung ist es, eine Freikolbenvorrichtung der eingangs genannten Art bereitzustellen, bei der die Einströmung von Frischgas im Hinblick insbesondere auf einen Fremdzündungsbetrieb optimiert ist.

Diese Aufgabe wird durch eine erfindungsgemäße Freikolbenvorrichtung mit den Merkmalen von Anspruch 1 gelöst.

Bei der erfindungsgemäßen Freikolbenvorrichtung ist ein radial seitlich neben der Achse und axial bezüglich der mindestens einen Einlassöffnung versetzter Anströmbereich vorgesehen, auf den die Frischgaseinströmung gerichtet ist. Die Menge an einströmendem Frischgas zum Anströmbereich ist dadurch größer als in Richtung auf die bezüglich der Achse gegenüberliegende Seite des Brennraumes. Es ergibt sich eine zur Achse asymmetrische Anströmung, die an der dem Anströmbereich benachbarten Seite der Wandung des Brennraumes Verwirbelungen hervorruft. Eine schraubenförmige Bewegung um die Achse kann vermieden werden. Die Verwirbelungen bilden bei der Kompression des Frischgases, wenn der Kolben die Aufwärtsbewegung ausführt, kleinere Wirbel und führen zu stärkerer Turbulenz. Die turbulente Flammengeschwindigkeit bei der Verbrennung ist vergrößert, wodurch der Brennstoff schneller umgesetzt wird und ein höherer Wirkungsgrad bei niedrigerer Emission erzielt werden kann. Eine Auslöschung der Flammen nach dem Zünden, wie sie bei einer schraubenförmigen Bewegung des Frischgases im Fremdzündungsbetrieb erfolgen kann, lässt sich dadurch vermeiden.

Von Vorteil ist es, dass die Einströmeinrichtung so ausgebildet ist, dass eine walzenförmige Bewegung des einströmenden Frischgases im Brennraum erzielbar ist, wobei einströmendes Frischgas um eine quer zur Achse ausgerichtete Wälzachse wälzt. Es zeigt sich in der Praxis, dass eine derartige walzenförmige Bewegung (tumble) eine besonders vorteilhafte Umsetzung des Brennstoffes im Fremdzündungsbetrieb ermöglicht.

Die Wälzachse ist vorzugsweise mittig oder im Wesentlichen mittig zwischen der mindestens einen Einlassöffnung und der mindestens einen Auslassöffnung angeordnet.

Von Vorteil ist es, wenn der Anströmbereich in axialer Richtung ungefähr mittig zwischen der mindestens einen Einlassöffnung und der mindestens einen Auslassöffnung angeordnet ist oder wenn der Anströmbereich einer Mitte zwischen der mindestens einen Einlassöffnung und der mindestens einen Auslassöffnung in Richtung der mindestens einen Einlassöffnung vorgelagert angeordnet ist. "Mittig" zwischen den Öffnungen bezeichnet insbesondere eine Mitte des Brennraumes, beispielsweise bei einer Gegenkolbenanordnung.

Der Anströmbereich kann beispielsweise ungefähr mittig zwischen der Achse und der Wandung angeordnet sein. Alternativ ist denkbar, dass der Anströmbereich an die Wandung angrenzend positioniert ist.

Die Kolbenaufnahme weist an der Wandung zumindest von der mindestens einen Einlassöffnung bis zur mindestens einen Auslassöffnung vorzugsweise eine hohlzylindrische Form auf.

Die mindestens eine Einlassöffnung ist vorteilhafterweise schlitzförmig oder schachtförmig ausgestaltet.

Von Vorteil ist es, wenn die mindestens eine Einlassöffnung zum Erzielen einer axialen Bewegungskomponente einströmenden Frischgases relativ zur Achse geneigt ausgestaltet ist. Die Einlassöffnung weist eine Neigung bezüglich der Achse auf, so dass einströmendes Frischgas mit einer axialen Komponente in den Brennraum einströmen kann. Auf diese Weise ist die Strömung des Frischgases auf einen zwischen der mindestens einen Einlassöffnung und der mindestens einen Auslassöffnung gerichteten Anströmbereich im Brennraum gerichtet.

Insbesondere kann eine Mehrzahl von Einlassöffnungen vorgesehen sein, die relativ zur Achse geneigt ausgestaltet sind und dadurch dem jeweils einströmenden Frischgas eine axiale Bewegungskomponente verleihen.

Günstig ist es, dass eine Mehrzahl von in Umfangsrichtung der Achse voneinander beabstandeten Einlassöffnungen vorgesehen ist. Die Einlassöffnungen sind in axialer Richtung vorzugsweise an derselben Position an der Wandung gebildet.

Von Vorteil ist es, dass die Einlassöffnungen spiegelsymmetrisch zueinander bezüglich einer die Achse enthaltenden Mittellängsebene der Kolbenaufnahme an der Wandung angeordnet und ausgestaltet sind. Dies ermöglicht beispielsweise eine Einströmung von Frischgas in Richtung auf die Mittellängsebene derart, dass beiderseits der Mittellängsebene gleiche oder im Wesentlichen gleiche Volumenströme von Frischgas einströmen. Eine Ausbildung einer schraubenförmigen Strömung lässt sich dadurch vermeiden.

Günstig ist es, wenn eine Einlassöffnung vorgesehen ist, die, bezogen auf eine Schnittebene quer zur Achse, radial auf die Achse und eine der Einlassöffnung gegenüberliegende Seite der Wandung gerichtet ist. Der Anströmbereich kann auf der der Einlassöffnung gegenüberliegenden Seite des Brennraumes angeordnet sein. Das über die Einlassöffnung einströmende Frischgas weist eine radiale Bewegungskomponente auf, die auf die Achse und die der Einlassöffnung gegenüberliegende Seite der Wandung gerichtet ist. Ergänzend ist vorzugsweise eine axiale Bewegungskomponente des Frischgases infolge der vorstehend erwähnten Neigung der Einlassöffnung relativ zur Achse vorhanden. Frischgas strömt zu der der Einlassöffnung gegenüberliegenden Seite des Brennraumes zwischen der Achse und der Wandung, wodurch an dieser Stelle ein Anströmbereich gebildet wird. Der Anströmbereich liegt der Einlassöffnung bezüglich der Achse gegenüber.

Von Vorteil ist es, wenn an einer dieser Einlassöffnung bezüglich der Achse gegenüberliegenden Seite an der Wandung keine Einlassöffnung gebildet ist, insbesondere der Einlassöffnung diametral gegenüberliegend. Radial zur Achse erfolgt dadurch eine asymmetrische Einströmung von Frischgas, vorzugsweise zur Ausbildung einer walzenförmigen Bewegung.

Die Einlassöffnung ist insbesondere an einer die Achse enthaltenden Mittellängsebene der Kolbenaufnahme angeordnet.

Die Einlassöffnung ist günstigerweise radial angeströmt.

Es kann vorzugsweise eine Einlassöffnung vorgesehen sein, die, bezogen auf eine Schnittebene quer zur Achse, nicht radial auf die Achse gerichtet ist, sondern auf einen Bereich des Brennraumes, der in Umfangsrichtung der Achse einen Winkelabstand zu der Einlassöffnung von weniger als 180° aufweist. Durch diese Einlassöffnung einströmendes Frischgas ist dadurch auf den Bereich des Brennraumes gerichtet, der der Einlassöffnung nicht radial bezüglich der Achse gegenüberliegt. Die Einlassöffnung ist vorzugsweise in Richtung auf den Bereich des Brennraumes gekrümmt oder gebogen ausgestaltet. Dies begünstigt die Ausbildung einer walzenförmigen Bewegung von Frischgas.

Von Vorteil ist es, wenn der Einlassöffnung eine korrespondierende, bezüglich einer Mittellängsebene spiegelbildlich dazu ausgerichtete Einlassöffnung zugeordnet ist. Dies ermöglicht einen von beiden Seiten der Mittellängsebene betragsmäßig gleichen Volumenstrom. Die Ausbildung einer schraubenförmigen Bewegung des Frischgases kann dadurch vermieden werden.

Zusätzlich zu der Einlassöffnung, die in Umfangsrichtung der Achse einen Winkelabstand zu dem vorstehend genannten Bereich des Brennraumes aufweist, ist bevorzugt mindestens eine weitere Einlassöffnung vorgesehen, die auf denselben Bereich des Brennraumes gerichtet ist, welcher in Umfangsrichtung der Achse einen geringeren Winkelabstand zu der weiteren Einlassöffnung aufweist als die erstgenannte Einlassöffnung.

Bei der zuletzt erwähnten Ausführungsform ist es von Vorteil, wenn ein Volumenstrom an einströmendem Frischgas umso größer ist, je größer der Winkelabstand zwischen der Einlassöffnung und dem Bereich des Brennraumes ist. In Umfangsrichtung der Achse die dem genannten Bereich des Brennraumes nähergelegenen Einlassöffnungen (bezogen auf den Winkelabstand in einer Schnittebene quer zur Achse) beaufschlagen den Brennraum mit einem geringeren Volumenstrom an Frischgas. Die Asymmetrie der Frischgaseinströmung wird dadurch erhöht, und dies begünstigt die Ausbildung des definierten Anströmbereiches und vorzugsweise einer walzenförmigen Bewegung von Frischgas im Brennraum.

Als vorteilhaft erweist es sich, wenn die Einströmeinrichtung einen die Wandung umgebenden Einströmraum umfasst oder bildet, der über eine Zufuhrleitung mit Frischgas beaufschlagbar ist und der über die mindestens eine Einlassöffnung in den Brennraum mündet, insbesondere über die Mehrzahl von Einlassöffnungen. Im Einströmraum kann eine Beruhigung des Frischgases zur Dämpfung von Pulsationen und Verwirbelungen erfolgen, was sich als vorteilhaft für die Strömungsverhältnisse beim Einströmen in den Brennraum erweist.

Bei einer vorteilhaften Ausführungsform ist der Einströmraum im Querschnitt zur Achse ringförmig oder im Wesentlichen ringförmig und insbesondere kreisringförmig. Beispielsweise ist der Einströmraum torusförmig und in radialer Richtung über eine Eintrittsöffnung für Frischgas beströmbar.

Besonders vorteilhaft ist bei ringförmigem Querschnitt eine exzentrische, nicht-koaxiale Ausrichtung des Einströmraumes relativ zur Achse. Dadurch weist der Einströmraum an unterschiedlichen Positionen relativ zur Wandung unterschiedliche Querschnitte auf. Beispielsweise ist der Querschnitt des Einströmraumes auf der Seite, zu der der Einströmraum exzentrisch bezüglich der Achse versetzt ist, größer auf der der Achse gegenüberliegenden Seite des Einströmraumes. Erfolgt die Einströmung von Frischgas von der erstgenannten Seite (beispielsweise durch eine radial auf die Achse ausgerichtete Einlassöffnung), kann dadurch eine asymmetrische Einströmung in den Brennraum erfolgen. Weitere, in Umfangsrichtung der Achse folgende Einlassöffnungen werden umso weniger stark beströmt, je geringer der Winkelabstand zwischen der Einlassöffnung und dem Anströmbereich im Brennraum ist, wie dies vorstehend erläutert wurde.

Die Freikolbenvorrichtung kann an mindestens einer Einlassöffnung ein Stellorgan aufweisen, über das die Einströmrichtung für Frischgas in den Brennraum einstellbar ist. Beispielsweise kann mittels einer Steuereinrichtung der Freikolbenvorrichtung eine Stellung des jeweiligen Stellorganes eingestellt werden, um eine optimale Einströmung von Frischgas zu ermöglichen und dadurch den Betriebspunkt der Freikolbenvorrichtung zu optimieren.

Am Brennraum kann wie erwähnt insbesondere eine Zündeinrichtung für einen Betrieb mit Fremdzündung vorgesehen sein.

Alternativ oder ergänzend kann am Brennraum insbesondere eine Einspritzeinrichtung zum Einspritzen eines Brennstoffes vorgesehen sein.

Die Kolbenaufnahme kann ein Gehäuse umfassen und eine Kolbenlaufbuchse, die in das Gehäuse eingesetzt ist und die die Wandung umfasst oder bildet. Der Kolben kann in der Kolbenlaufbuchse hin- und herbewegbar sein, und die mindestens eine Einlassöffnung und vorzugsweise die mindestens eine Auslassöffnung kann/können in der Kolbenlaufbuchse gebildet sein. Die Kolbenlaufbuchse ist insbesondere eine Zylinderlaufbuchse.

Die Freikolbenvorrichtung umfasst vorzugsweise eine mit der Kolbeneinrichtung gekoppelte Energiekopplungseinrichtung, über die Energie der Kolbeneinrichtung auskoppelbar oder über die Energie an die Kolbeneinrichtung einkoppelbar ist. Es besteht insbesondere die Möglichkeit, die Bewegung der Kolbeneinrichtung mittels der Energiekopplungseinrichtung zu steuern. "Steuern" ist vorliegend dahingehend auszulegen, dass damit alternativ oder ergänzend auch "regeln" gemeint ist. "Steuerung" kann vorliegend daher als "Steuerung und/oder Regelung" aufgefasst werden. Durch die Ansteuerung der Energiekopplungseinrichtung, die von einer Steuereinrichtung der Freikolbenvorrichtung vorgenommen werden kann, kann der Betriebspunkt der Freikolbenvorrichtung im Betrieb eingestellt werden. Zu diesem Zweck kann bei Bedarf Energie von der Energiekopplungseinrichtung an die Kolbeneinrichtung übertragen werden oder Energie der Kolbeneinrichtung über die Energiekopplungseinrichtung entnommen werden.

Die Energiekopplungseinrichtung umfasst vorteilhafterweise mindestens einen Lineargenerator. Der Lineargenerator weist beispielsweise eine an der Kolbeneinrichtung festgelegte Läuferanordnung auf und eine Statoranordnung. Läuferanordnung und Statoranordnung sind oder umfassen insbesondere Magnete bzw. Spulen.

Der Kolbeneinrichtung können zwei Lineargeneratoren zugeordnet sein mit einer jeweiligen Läuferanordnung und einer jeweiligen Statoranordnung. Ein jeweiliger Lineargenerator kann zum Beispiel seitlich neben der Kolbenaufnahme positioniert sein und eine der nachfolgend erwähnten Einheiten der Energiekopplungseinrichtung ausbilden.

Von Vorteil ist, wenn die Energiekopplungseinrichtung seitlich neben der Kolbenaufnahme positioniert und parallel zu dieser ausgerichtet ist. Dies ermöglicht eine kompakte Bauform der Freikolbenvorrichtung.

Die Energiekopplungseinrichtung kann eine erste Einheit und eine zweite Einheit umfassen, die jeweils seitlich neben der Kolbenaufnahme positioniert sind, wobei die Kolbenaufnahme zwischen den Einheiten der Energiekopplungseinrichtung angeordnet ist. Zum Ausgleich der bewegten Massen und Momente ist es günstig, wenn die Energiekopplungseinrichtung zwei Einheiten umfasst, deren jede beispielsweise wie vorstehend erwähnt durch einen Lineargenerator gebildet ist.

Günstigerweise ist der Kolben zumindest teilweise über die mindestens eine Einlassöffnung bewegbar, wobei diese bei Einnahme des unteren Totpunktes durch den Kolben zumindest teilweise freigebbar ist. Der Kolben kann auf diese Weise einen Ventilkörper für die mindestens eine Einlassöffnung bilden. Ein gesondertes Ventil kann eingespart werden. Im unteren Totpunkt des Kolbens kann Frischgas aus dem Beruhigungsraum durch die mindestens eine Einlassöffnung zum Spülen des Brennraums einströmen.

Die Freikolbenvorrichtung umfasst vorzugsweise eine weitere Kolbeneinrichtung mit einem Kolben, wobei die Kolben beider Kolbeneinrichtungen in Gegenkolbenanordnung positioniert sind, wobei der Brennraum zwischen den Kolben gebildet ist. Durch die Gegenkolbenanordnung kann vorzugsweise ein Ausgleich der bewegten Massen und Momente erzielt werden. Die Kolbeneinrichtungen oszillieren dabei entgegengesetzt zueinander in der Kolbenaufnahme. Der Brennraum ist in Folge der gegenläufigen Bewegung der Kolbeneinrichtungen größenveränderlich zwischen den Kolben gebildet.

Die Freikolbenvorrichtung kann eine weitere Rückfedereinrichtung umfassen, die der weiteren Kolbeneinrichtung zugeordnet ist. Die Rückfedereinrichtung kann eine Gasfeder umfassen und/oder mechanisch ausgestaltet sein.

Der weiteren Kolbeneinrichtung kann ebenfalls eine Energiekopplungseinrichtung zugeordnet sein, die vorzugsweise seitlich neben der Kolbenaufnahme positioniert ist. Die Energiekopplungseinrichtung kann einen Lineargenerator umfassen. Beispielsweise sind zwei jeweils seitlich neben der Kolbenaufnahme positionierte Einheiten der weiteren Energiekopplungseinrichtung vorgesehen. Jede Einheit kann durch einen Lineargenerator gebildet sein.

Der Kolben der weiteren Kolbeneinrichtung ist bevorzugt zumindest teilweise über die mindestens eine Auslassöffnung bewegbar, wobei diese bei Einnahme des unteren Totpunktes durch den Kolben zumindest teilweise freigebbar ist. Dadurch kann der Kolben einen Ventilkörper für die mindestens eine Auslassöffnung bilden. Ein gesondertes Ventil kann eingespart werden. Im unteren Totpunkt des Kolbens kann Abgas durch die mindestens eine Auslassöffnung aus dem Brennraum strömen.

Wie eingangs erwähnt, betrifft die vorliegende Erfindung auch ein Verfahren. Ein erfindungsgemäßes Verfahren umfasst die Merkmale des unabhängigen Anspruches 15.

Die Vorteile, die bereits im Zusammenhang mit der Erläuterung der erfindungsgemäßen Freikolbenvorrichtung erwähnt wurden, können bei einer Ausübung des Verfahrens ebenfalls erzielt werden. Diesbezüglich kann auf die voranstehenden Ausführungen verwiesen werden.

Vorteilhafte Ausführungsbeispiele des erfindungsgemäßen Verfahrens ergeben sich durch vorteilhafte Ausführungsformen der erfindungsgemäßen Freikolbenvorrichtung. Diesbezüglich kann zur Vermeidung von Wiederholungen ebenfalls auf voranstehende Ausführungen verwiesen werden.

Die nachfolgende Beschreibung einer bevorzugten Ausführungsform der Erfindung dient im Zusammenhang mit der Zeichnung der näheren Erläuterung der Erfindung. Beschrieben wird eine erfindungsgemäße Freikolbenvorrichtung, mit der ein erfindungsgemäßes Verfahren durchführbar ist. Es zeigen:

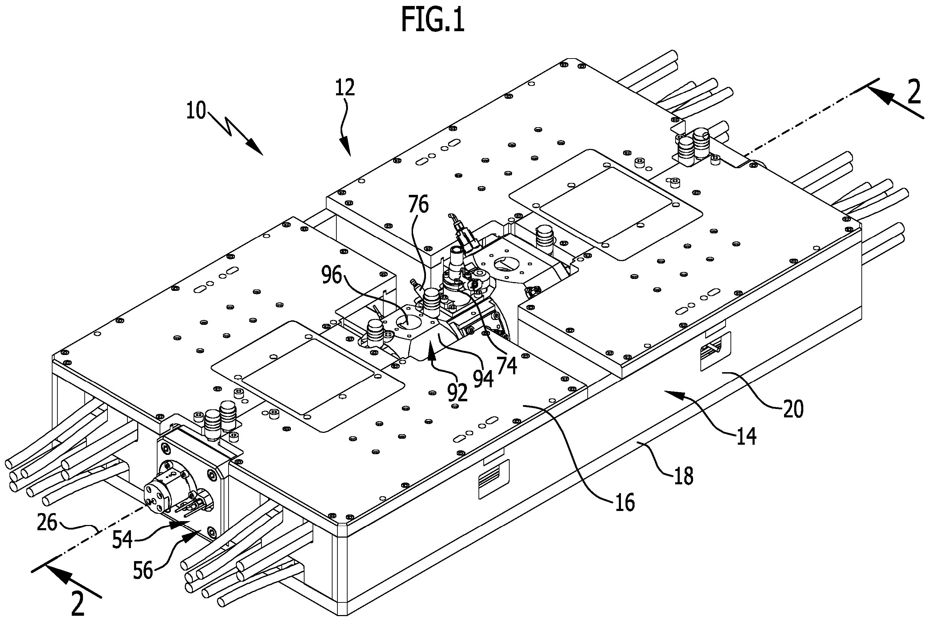

- Figur 1:: eine perspektivische Darstellung einer erfindungsgemäßen Freikolbenvorrichtu ng;
- Figur 2:: eine Längsschnittansicht der Freikolbenvorrichtung aus Figur 1;
- Figur 3:: eine vergrößerte Darstellung von Detail A in Figur 2;
- Figur 4:: eine Schnittansicht längs der Linie 4-4 in Figur 3;
- Figuren 5 bis 7:: schematisch die Einströmung von Frischgas in einen Brennraum der Freikolbenvorrichtung aus Figur 1 beim Ladungswechsel und zu drei aufeinanderfolgenden Zeitpunkten, wobei sich eine walzenförmige Bewegung von Frischgas im Brennraum ausbildet.

Die Zeichnung zeigt eine mit dem Bezugszeichen 10 belegte vorteilhafte Ausführungsform einer erfindungsgemäßen Freikolbenvorrichtung, die insbesondere einen Freikolbenmotor 12 ausbildet.

Die Freikolbenvorrichtung 10 umfasst ein äußeres Gehäuse 14, das vorliegend quaderförmig ist und als Flachgehäuse ausgestaltet ist. Das Gehäuse 14 definiert zwischen einer oberen Wand 16, einer unteren Wand 18 und einer Seitenwand 20 einen Aufnahmeraum 22.

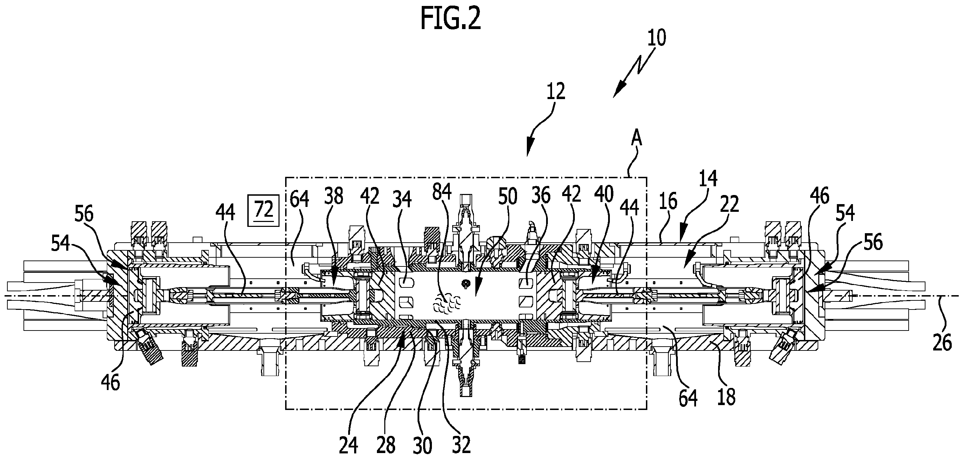

Im Gehäuse 14 ist eine Kolbenaufnahme 24 angeordnet. Die Kolbenaufnahme 24 ist längserstreckt und definiert eine Achse 26 der Freikolbenvorrichtung 10. Die Kolbenaufnahme 24 weist ein in einzelne Abschnitte unterteiltes Gehäuse 28 von ungefähr hohlzylindrischer Gestalt auf. In dem Gehäuse 28 ist eine Kolbenlaufbuchse 30 der Kolbenaufnahme 24 angeordnet. Die Kolbenlaufbuchse 30 ist im Wesentlichen hohlzylindrisch ausgestaltet und in einen mittleren Abschnitt des Gehäuses 28 eingesetzt (Figuren 2 bis 4).

In einer Wandung 32 der Kolbenlaufbuchse 30 und damit der Kolbenaufnahme 24 sind Öffnungen gebildet. Die Öffnungen umfassen zum einen Einlassöffnungen 34 und zum anderen Auslassöffnungen 36. Die Einlassöffnungen 34 sind von den Auslassöffnungen 36 axial beabstandet. "Axial" und "radial" bezieht sich vorliegend auf die Achse 26. "Axial" schließt auch eine parallel zur Achse 26 verlaufende Richtung ein. Die Einlassöffnungen 34 und die Auslassöffnungen 36 sind beispielsweise schlitzförmig oder schachtförmig ausgestaltet.

Die Freikolbenvorrichtung 10 umfasst zwei Kolbeneinrichtungen 38, 40. Die Kolbeneinrichtungen 38, 40 sind axial hin- und herbeweglich in der Kolbenaufnahme 24 angeordnet. Jede Kolbeneinrichtung 38, 40 weist einen (Verbrennungs-)Kolben 42 auf, eine Kolbenstange 44 und einen Gegenkolben 46. Die Kolben 42 umfassen jeweils eine Kolbenfläche 48 und sind in Gegenkolbenanordnung positioniert, wobei die Kolbenflächen 48 einander zuweisen.

Die Kolbenaufnahme 24 umfasst einen von der Wandung 32 begrenzten Brennraum 50. Der Brennraum 50 ist in Folge der gegenläufigen Bewegung der Kolbeneinrichtungen 38, 40 größenveränderlich und zwischen den Kolbenflächen 48 gebildet.

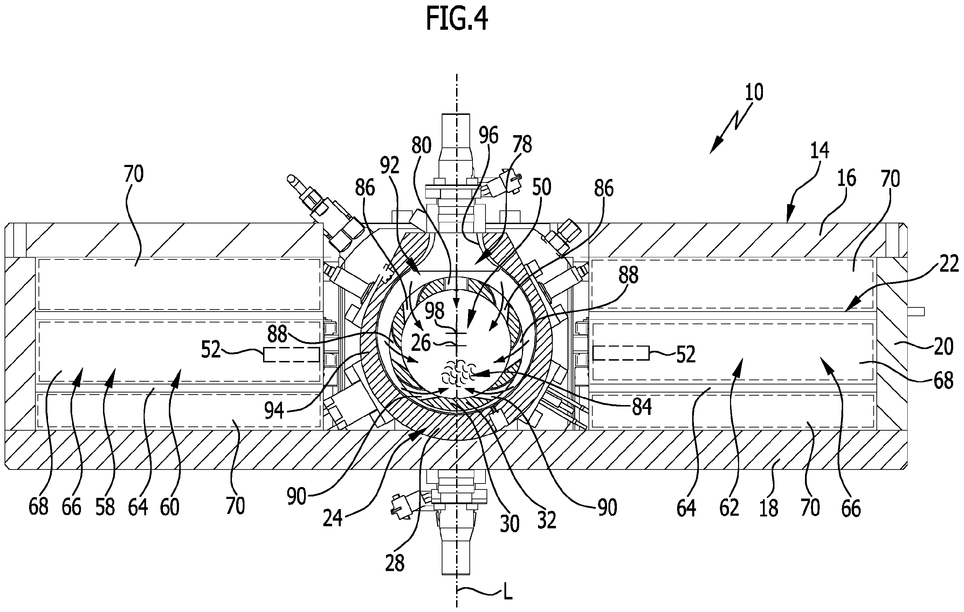

Die Kolbenstange 44 verbindet den Kolben 42 mit dem Gegenkolben 46, wobei vorliegend beide Kolben 42, 46 kippbeweglich an der Kolbenstange 44 gehalten sind. Jedoch ist auch eine starre Verbindung denkbar. Quer zur Achse 26 stehen von der Kolbenstange 44 Vorsprünge 52 auf einander gegenüber liegenden Seiten ab. Die Vorsprünge 52 treten aus dem Gehäuse 28 aus und ragen in den Aufnahmeraum 22 hinein. Figur 4 zeigt schematisch die Konturen der Vorsprünge 52. Die Kolbenstange 44 weist dadurch eine ungefähr kreuzförmige Gestalt auf.

Die Freikolbenvorrichtung 10 umfasst jeder Kolbeneinrichtung 38, 40 zugeordnet eine Rückfedereinrichtung 54. Die Rückfedereinrichtung 54 umfasst vorliegend eine Gasfeder 56 mit einem Rückfederraum. Der Rückfederraum ist vom Gehäuse 28 gebildet und endseitig an diesem angeordnet.

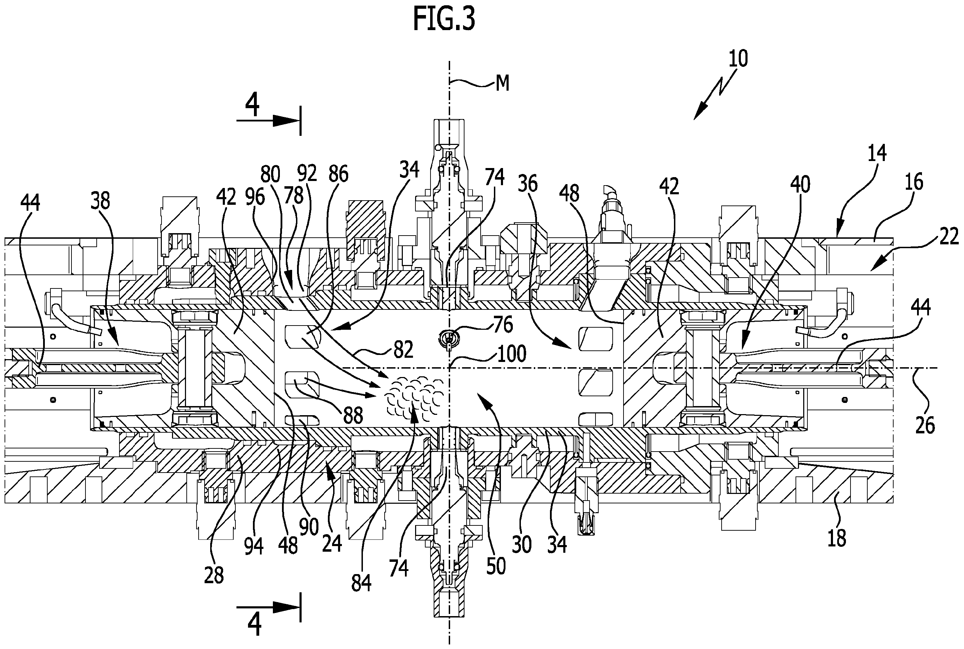

Bewegen sich die Kolbeneinrichtungen 38, 40 in Folge der Verbrennung im Brennraum 50 vom oberen Totpunkt zum unteren Totpunkt, wird ein Gas im Rückfederraum durch den Gegenkolben 46 komprimiert, bis der Kolben 42 seinen unteren Totpunkt einnimmt (Figuren 3 und 4). Bei der Expansion des Gases im Rückfederraum wird die jeweilige Kolbeneinrichtung 38, 40 wieder in die Gegenrichtung verschoben.

Die Freikolbenvorrichtung 10 weist zwei Energiekopplungseinrichtungen 58 auf, wobei jeder Kolbeneinrichtung 38, 40 eine Energiekopplungseinrichtung 58 zugeordnet ist. Jede Energiekopplungseinrichtung 58 umfasst eine erste Einheit 60 und eine zweite Einheit 62. Die Einheiten 60, 62 sind jeweils seitlich neben der Kolbenaufnahme 24 positioniert, jedoch auf einander gegenüberliegenden Seiten derselben. Beide Einheiten 60, 62 definieren eine gemeinsame Ebene, in der die Kolbenaufnahme 24 angeordnet ist.

Die Energiekopplungseinrichtungen 58 sind im Aufnahmeraum 22 des Gehäuses 14 aufgenommen. Jeder Einheit 60, 62 ist ein Raumbereich 64 des Aufnahmeraumes 22 zugeordnet, wobei jeder Raumbereich 64 von der oberen Wand 16, der unteren Wand 18, der Seitenwand 20 und der Kolbenaufnahme 24 begrenzt ist.

Jede Einheit 60, 62 ist durch einen Lineargenerator 66 mit einer Läuferanordnung 68 und einer Statoranordnung 70 gebildet. Die Läuferanordnung 68 ist über den Vorsprung 52 mit der Kolbenstange 44 verbunden und im Aufnahmeraum 22 parallel zur Achse 26 verschiebbar geführt. Die Läuferanordnung 68 umfasst Magnete. Die Statoranordnung 70 umfasst in der Zeichnung nicht einzeln dargestellte Spulen, die oberhalb und unterhalb der Läuferanordnung 68 angeordnet sind.

Figur 4 zeigt die Konturen der Läuferanordnungen 68 und der Statoranordnungen 70 zweier Einheiten 60, 62. Da der Kolben 42 der Kolbeneinrichtung 38 in der Zeichnung den unteren Totpunkt einnimmt, verläuft die Schnittansicht vorliegend nicht durch die Läuferanordnungen 68, die erst bei (gedachter) Aufwärtsbewegung des Kolbens 42 verschoben werden und die Schnittebene durchqueren.

Über die Energiekopplungseinrichtung 58 besteht die Möglichkeit, Energie in die Kolbeneinrichtung 38 oder 40 einzukoppeln bzw. dieser Energie zu entziehen. Dies erlaubt es, die Bewegung der Kolbeneinrichtung 38 oder 40 im Betrieb der Freikolbenvorrichtung 10 zu steuern. Die Energiekopplungseinrichtungen 58 sind zu diesem Zweck von einer Steuereinrichtung 72 (Figur 2) der Freikolbenvorrichtung 10 ansteuerbar.

Die Freikolbenvorrichtung 10 arbeitet vorliegend nach dem Zweitaktverfahren. Eine Verbrennung im Brennraum 50 treibt die Kolben 42 ausgehend vom oberen Totpunkt auseinander, so dass diese in der Kolbenlaufbuchse 30 axial verschoben werden. Die Verschiebung erfolgt bis zu einem jeweiligen unteren Totpunkt der Kolben 42. Nehmen die Kolben 42 den unteren Totpunkt ein, sind die Einlassöffnungen 34 vom Kolben 42 der Kolbeneinrichtung 40 freigegeben, und die Auslassöffnungen 36 sind vom Kolben 42 der Kolbeneinrichtung 38 freigegeben. Dies ist in den Figuren 2 bis 4 dargestellt.

Beim Ladungswechsel, wenn die Einlassöffnungen 34 und die Auslassöffnungen 36 freigegeben sind, wird der Brennraum 50 gespült. Frischgas strömt über die Einlassöffnungen 34 in den Brennraum 50. Abgas kann über die Auslassöffnungen 36 aus dem Brennraum 50 abgeführt werden. Es wird eine Längsspülung des Brennraumes 50 über die axial voneinander beabstandeten Öffnungen 34, 36 vorgenommen.

"Frischgas" ist vorliegend ein Gas oder Gasgemisch (insbesondere Luft) für die innere Verbrennung. Dem zugeführten Frischgas kann ein Brennstoff beigemischt sein. Vorteilhaft ist es, wenn dem in den Brennraum 50 eingeströmten Frischgas über eine Einspritzeinrichtung 74 ein Brennstoff beigemischt wird. Die Zündung der Ladung kann mittels einer Zündeinrichtung 76 erfolgen, d.h., die Freikolbenvorrichtung 10 kann insbesondere mit Fremdzündung betrieben werden. Die Einspritzeinrichtung 74 und die Zündeinrichtung 76 können von der Steuereinrichtung 72 ansteuerbar sein.

Nachfolgend wird insbesondere auf die Ausgestaltung der Einlassöffnungen 34 eingegangen, die von einer Einströmeinrichtung 78 der Freikolbenvorrichtung 10 umfasst sind. Die Einströmeinrichtung 78 ist im Hinblick auf eine Einströmung von Frischgas in den Brennraum 50 für einen vorteilhaften Fremdzündungsbetrieb mit hohem Wirkungsgrad und geringer Emission optimiert.

Wie insbesondere aus den Figuren 3 und 4 hervorgeht, sind die Einlassöffnungen 34 axial an derselben Stelle der Wandung 32 gebildet. Es sind vorliegend sieben Einlassöffnungen 34 vorhanden, wobei deren Zahl auch unterschiedlich sein könnte.

Die Einlassöffnungen sind insgesamt symmetrisch bezüglich einer Mittellängsebene L der Kolbenaufnahme 24 an der Wandung 32 gebildet. Die Mittellängsebene enthält die Achse 26 und ist vorliegend senkrecht zu den von den Wänden 16, 18 definierten Ebenen ausgerichtet, wobei die Ausrichtung auch unterschiedlich sein könnte.

Eine erste Einlassöffnung 80 ist in der Mittellängsebene L angeordnet. Die Einlassöffnung 80 ist, bezogen auf eine Schnittansicht quer zur Achse 26, radial auf die Achse 26 und die gegenüberliegende Seite der Wandung 32 gerichtet (Figur 4). Zusätzlich ist die Einlassöffnung 80 relativ zur Achse 26 geneigt, sie ist also mit einer Neigung relativ zur Achse 26 ausgerichtet (Figur 3). Frischgas, das durch die Einlassöffnung 80 einströmt, ist dadurch mit einer radialen Bewegungskomponente auf die gegenüberliegende Seite der Wandung 32 gerichtet und weist zusätzlich eine Bewegungskomponente in axialer Richtung auf. Einströmendes Frischgas, symbolisiert durch einen Pfeil 82 in Figur 3, ist dadurch auf einen Bereich im Brennraum 50 gerichtet, der nachfolgend als Anströmbereich 84 bezeichnet wird.

Der Anströmbereich 84 ist außermittig zur Achse 26 angeordnet und zwischen dieser und der Seite der Wandung 32 angeordnet, die der Einlassöffnung 80 gegenüberliegt.

In axialer Richtung ist der Anströmbereich 84 aufgrund der axialen Bewegungskomponente des Frischgases axial zu den Einlassöffnungen 34 in Richtung der Auslassöffnungen 36 versetzt im Brennraum 50 angeordnet. Vorliegend ist der Anströmbereich 84 einer Mitte zwischen den Einlassöffnungen 34 und den Auslassöffnungen 36 in Richtung der Einlassöffnungen 34 vorgelagert angeordnet. In Figur 3 ist dies anhand der Lage der Mittelquerebene M des Brennraumes 50 senkrecht zur Achse 26 zu erkennen.

Zusätzlich zur Einlassöffnung 80 umfassen die Einlassöffnungen 34 Einlassöffnungen 86, 88 und 90, von denen aufgrund der symmetrischen Anordnung der Einlassöffnungen 34 jeweils zwei Stück vorhanden sind. Je eine Einlassöffnung 86, 88 und 90 liegt einer korrespondierenden Einlassöffnung 86, 88 und 90 bezüglich der Mittellängsebene L symmetrisch gegenüber und ist spiegelbildlich zu dieser ausgestaltet.

Ausgehend von der Einlassöffnung 80 beträgt der Winkelabstand benachbarter Einlassöffnungen 80 in Umfangsrichtung der Achse 26 ungefähr 50°.

Die Einlassöffnungen 86 sind so ausgestaltet, dass aus ihnen austretendes Frischgas nicht auf einen Bereich im Brennraum 50 gerichtet ist, der der Einlassöffnung 86 bezüglich der Achse 26 gegenüberliegt, wie dies bei der Einlassöffnung 80 der Fall ist. Stattdessen ist einströmendes Frischgas auf einen Bereich im Brennraum 50 gerichtet, der in Umfangsrichtung der Achse 26 einen Winkelabstand zur Einlassöffnung 86 von weniger als 180° aufweist. Entsprechendes gilt für die Einlassöffnungen 88 und für die Einlassöffnungen 90.

Der Bereich, auf den aus den Einlassöffnungen 86, 88 und 90 jeweils einströmendes Frischgas gerichtet ist, ist der Anströmbereich 84. Dabei erfolgt die Einströmung jeweils seitlich an der Achse 26 vorbei (Figur 4). Zu diesem Zweck sind die Einlassöffnungen 86, 88 und 90 vorteilhafterweise gekrümmt oder gebogen ausgestaltet.

Zusätzlich weisen auch die Einlassöffnungen 86, 88 und 90 jeweils eine Neigung relativ zur Achse 26 auf, um dem einströmenden Frischgas eine axiale Bewegungskomponente im Hinblick auf die Einströmung an den Anströmbereich 84 zu ermöglichen.

Durch die symmetrische Anordnung von Einlassöffnungen 34 bezüglich der Mittellängsebene L wird vermieden, dass einströmendes Frischgas eine schraubenförmige Bewegung im Brennraum 50 ausbildet. Volumenströme von Frischgas, die von beiden Seiten über die Einlassöffnungen 86, 88 und 90 auf die Mittellängsebene L einströmen, heben einander quer zur Achse 26 auf. Eine zu einer Schraubenbewegung des Frischgases führende Resultierende ist nicht vorhanden.

Durch die vorstehend erläuterte Ausgestaltung der Einströmeinrichtung 78 erfolgt eine erheblich asymmetrische Einströmung von Frischgas in den Brennraum 50, so dass sich der außermittig zur Achse 26 und in axialer Richtung zu den Einlassöffnungen 34 versetzte Anströmbereich 84 bildet.

Zu diesem Zweck ist es besonders vorteilhaft, dass auf der der Einlassöffnung 80 gegenüberliegenden Seite der Wandung 32 keine Einlassöffnung gebildet ist, insbesondere der Einlassöffnung 80 diametral gegenüberliegend.

Weiter ist es von Vorteil, dass die Volumenströme durch die Einlassöffnungen 80 sowie 86 bis 90 unterschiedlich groß sind. Insbesondere sind die Volumenströme umso größer, je größer der Winkel in Umfangsrichtung der Achse 26 zwischen der jeweiligen Einlassöffnung 80 sowie 86 bis 90 und der unteren Seite der Wandung 32 ist, der der Anströmbereich 84 benachbart ist.

Hierzu ist es günstig, dass die Einströmeinrichtung 78 einen Einströmraum 92 bildet. Der Einströmraum 92 ist gehäuseartig ausgestaltet und umfasst eine Außenwand 94, die vorliegend von dem Gehäuse 28 gebildet ist. Die Außenwand 94 ist radial außerhalb der Wandung 32 im axialen Bereich der Einlassöffnungen 34 angeordnet.

In der Außenwand 94 ist eine Eintrittsöffnung 96 gebildet, an die eine in der Zeichnung nicht dargestellte Zufuhrleitung für Frischgas oder ein entsprechendes Anschlusselement für eine Zufuhrleitung angeschlossen sein kann. Die Eintrittsöffnung 96 ist an der der Einlassöffnung 80 zugewandten Seite in der Außenwand 94 gebildet und im Bereich der Mittellängsebene L angeordnet (Figur 4).

Der Einströmraum 92 ist ungefähr torusförmig und weist im Querschnitt daher eine im Wesentlichen ringförmige Gestalt auf. Allerdings ist der Einströmraum 92 exzentrisch, nicht-koaxial zur Kolbenlaufbuchse 30 ausgerichtet. Eine Achse 98, die vom Einströmraum 92 definiert ist, ist bezüglich der Achse 26 versetzt, und zwar in Richtung der Einlassöffnung 80.

Die Anordnung und Ausbildung des Einströmraumes 92 hat zur Folge, dass durch die Eintrittsöffnung 96 eintretendes Frischgas mit einem hohen Volumenstrom über die Einlassöffnung 80 radial in Richtung der Achse 26 (sowie mit der axialen Bewegungskomponente) in den Brennraum 50 einströmt.

Oberhalb der Einlassöffnung 80 bildet das einströmende Frischgas zwei weitere Teilströme, die in entgegengesetzter Richtung um die Wandung 32 strömen. Jeder Teilstrom tritt durch die Einlassöffnungen 86, 88 und 90 in den Brennraum ein.

Aufgrund der exzentrischen Anordnung des Einströmraumes 92 ist der Volumenstrom durch die Einlassöffnungen 86 hindurch größer als der Volumenstrom durch die Einlassöffnungen 88 hindurch, der seinerseits größer ist als der Volumenstrom durch die Einlassöffnungen 90 hindurch. Dies ergibt sich durch die in Strömungsrichtung des Frischgases im Einströmraum 92 abnehmende Querschnittsfläche als Folge der exzentrischen Anordnung.

Die stark asymmetrische Einströmung von Frischgas in den Brennraum 50 und die Ausbildung des Anströmbereiches 84 führt zu einer walzenförmigen Bewegung des Frischgases im Brennraum. Näherungsweise wird das Frischgas im Brennraum 50 umgewälzt, und zwar um eine ungefähr in der Mitte des Brennraumes verlaufende Wälzachse 100. Die Wälzachse 100 ist quer zur Achse 26 ausgerichtet.

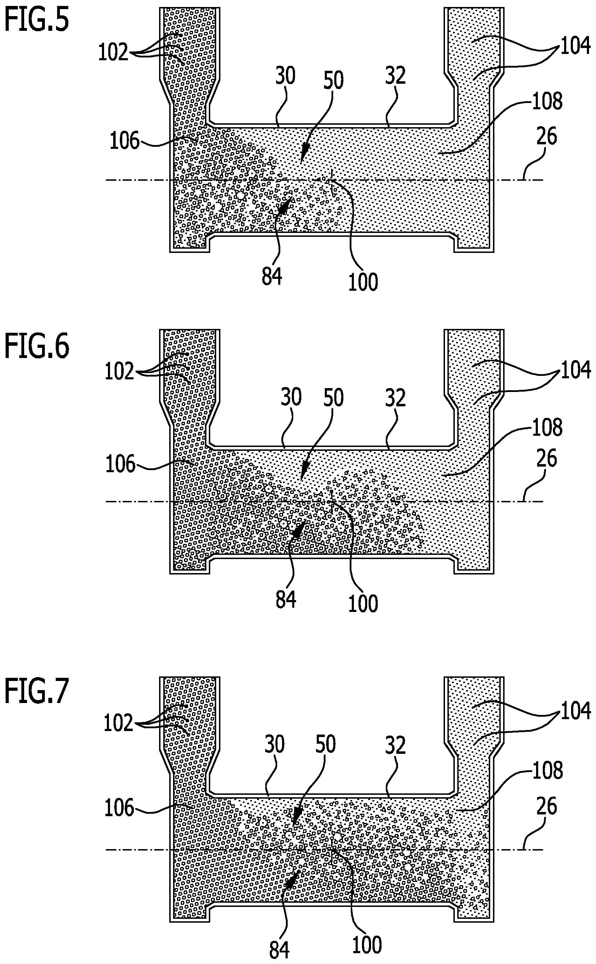

Die Figuren 5, 6 und 7 zeigen das Mischungsverhältnis von einströmendem Frischgas zu dem ausströmenden Abgas zu aufeinanderfolgenden Zeiten beim Ladungswechsel. Das einströmende Frischgas wird durch offene Kreise 102 symbolisiert und das ausströmende Abgas durch Punkte 104. Die Einlassöffnungen 34 sind in dem mit den Bezugszeichen 106 gekennzeichneten Bereich angeordnet und die Auslassöffnungen 36 in dem mit dem Bezugszeichen 108 gekennzeichneten Bereich.

Es zeigt sich, dass einströmendes Frischgas zu Beginn des Ladungswechsels (Figur 5) auf den Anströmbereich 84 gerichtet ist und bei fortschreitendem Ladungswechsel (Figuren 5 und 6) eine ungefähr walzenförmige Bewegung um die Wälzachse 100 im Brennraum 50 bildet.

Eine derartige Verteilung von Frischgas im Brennraum 50 für einen Betrieb mit Fremdzündung über die Zündeinrichtung 76 erweist sich in der Praxis als vorteilhaft. Bei der Aufwärtsbewegung der Kolben 42 werden kleinere Wirbel an Frischgas gebildet und die Turbulenz erhöht. Die Umsetzung des Kraftstoffes nach der Zündung erfolgt schneller, und der Wirkungsgrad ist bei niedrigerer Emission gesteigert.

### Bezugszeichen

- 10: Freikolbenvorrichtung
- 12: Freikolbenmotor
- 14: Gehäuse
- 16: obere Wand
- 18: untere Wand
- 20: Seitenwand
- 22: Aufnahmeraum
- 24: Kolbenaufnahme
- 26: Achse
- 28: Gehäuse
- 30: Kolbenlaufbuchse
- 32: Wandung
- 34: Einlassöffnung
- 36: Auslassöffnung
- 38: Kolbeneinrichtung
- 40: Kolbeneinrichtung
- 42: Kolben
- 44: Kolbenstange
- 46: Gegenkolben
- 48: Kolbenfläche
- 50: Brennraum
- 52: Vorsprung
- 54: Rückfedereinrichtung
- 56: Gasfeder
- 58: Energiekopplungseinrichtung
- 60: Einheit
- 62: Einheit
- 64: Raumbereich
- 66: Lineargenerator
- 68: Läuferanordnung
- 70: Statoranordnung
- 72: Steuereinrichtung
- 74: Einspritzeinrichtung
- 76: Zündeinrichtung
- 78: Einströmeinrichtung
- 80: Einlassöffnung
- 82: Pfeil
- 84: Anströmbereich
- 86: Einlassöffnung
- 88: Einlassöffnung
- 90: Einlassöffnung
- 92: Einströmraum
- 94: Außenwand
- 96: Eintrittsöffnung
- 98: Achse
- 100: Wälzachse
- 102: offener Kreis (Frischgas)
- 104: Punkt (Abgas)
- 106: Bereich Einlassöffnungen
- 108: Bereich Auslassöffnungen

## Patentansprüche

1. Freikolbenvorrichtung, umfassend eine Kolbenaufnahme (24), in der mindestens eine Kolbeneinrichtung (38, 40) mit einem Kolben (42) längs einer Achse (26) hin- und herbeweglich angeordnet ist, wobei die Kolbenaufnahme (24) einen von einer Wandung (32) begrenzten Brennraum (50) umfasst oder bildet, in der mindestens eine Einlassöffnung (34, 80, 86, 88, 90) für die Zufuhr von Frischgas und, in axialer Richtung davon beabstandet, mindestens eine Auslassöffnung (36) für die Abfuhr von Abgas gebildet sind, **dadurch gekennzeichnet, dass** die Freikolbenvorrichtung (10) eine Einströmeinrichtung (78) für Frischgas umfasst, die die mindestens eine Einlassöffnung (34, 80, 86, 88, 90) aufweist und derart ausgebildet ist, dass in den Brennraum (50) einströmendes Frischgas auf einen axial zur mindestens einen Einlassöffnung (34, 80, 86, 88, 90) in Richtung der mindestens einen Auslassöffnung (36) versetzt angeordneten Anströmbereich (84) im Brennraum (50) gerichtet ist, der außermittig relativ zur Achse (26) angeordnet ist, wobei die Einströmeinrichtung (76) so ausgebildet ist, dass eine walzenförmige Bewegung des einströmenden Frischgases im Brennraum (50) erzielbar ist und einströmendes Frischgas um eine quer zur Achse (26) ausgerichtete Wälzachse (100) wälzt, und wobei eine Mehrzahl von in Umfangsrichtung der Achse (26) voneinander beabstandeten Einlassöffnungen (34, 80, 86, 88, 90) vorgesehen ist, die spiegelsymmetrisch zueinander bezüglich einer die Achse enthaltenden Mittellängsebene (L) der Kolbenaufnahme (24) an der Wandung (32) angeordnet und ausgestaltet sind.

2. Freikolbenvorrichtung nach Anspruch 1 **dadurch gekennzeichnet, dass** die Wälzachse (100) mittig oder im Wesentlichen mittig zwischen der mindestens einen Einlassöffnung (34, 80, 86, 88, 90) und der mindestens einen Auslassöffnung (36) angeordnet ist.

3. Freikolbenvorrichtung nach Anspruch 1 oder 2, **dadurch gekennzeichnet, dass** der Anströmbereich (84) in axialer Richtung ungefähr mittig zwischen der mindestens einen Einlassöffnung (34, 80, 86, 88, 90) und der mindestens einen Auslassöffnung (36) angeordnet ist oder dass der Anströmbereich (84) einer Mitte zwischen der mindestens einen Einlassöffnung (34, 80, 86, 88, 90) und der mindestens einen Auslassöffnung (36) in Richtung der mindestens einen Einlassöffnung (34, 80, 86, 88, 90) vorgelagert angeordnet ist.

4. Freikolbenvorrichtung nach einem der voranstehenden Ansprüche, **dadurch gekennzeichnet, dass** die mindestens eine Einlassöffnung (34, 80, 86, 88, 90) zum Erzielen einer axialen Bewegungskomponente einströmenden Frischgases relativ zur Achse (26) geneigt ausgestaltet ist, insbesondere dass eine Mehrzahl von Einlassöffnungen (34, 80, 86, 88, 90) vorgesehen ist, die relativ zur Achse (26) geneigt ausgestaltet sind.

5. Freikolbenvorrichtung nach einem der voranstehenden Ansprüche, **dadurch gekennzeichnet, dass** die Einlassöffnungen (34, 80, 86, 88, 90) in axialer Richtung an derselben Position an der Wandung (32) gebildet sind.

6. Freikolbenvorrichtung nach einem der voranstehenden Ansprüche, **dadurch gekennzeichnet, dass** eine Einlassöffnung (80) vorgesehen ist, die bezogen auf eine Schnittebene quer zur Achse (26) radial auf die Achse (26) und eine der Einlassöffnung (80) gegenüberliegende Seite der Wandung (32) gerichtet ist, wobei der Anströmbereich (84) auf der der Einlassöffnung (80) gegenüberliegenden Seite des Brennraumes (50) angeordnet ist, vorzugsweise dass an einer dieser Einlassöffnung (80) bezüglich der Achse (26) gegenüberliegenden Seite an der Wandung (32) keine Einlassöffnung gebildet ist.

7. Freikolbenvorrichtung nach einem der voranstehenden Ansprüche, **dadurch gekennzeichnet, dass** eine Einlassöffnung (86, 88, 90) vorgesehen ist, die bezogen auf eine Schnittebene quer zur Achse (26) nicht radial auf die Achse (26) gerichtet ist, sondern auf einen Bereich (84) des Brennraumes (50), der in Umfangsrichtung der Achse (26) einen Winkelabstand zu der Einlassöffnung (86, 88, 90) von weniger als 180° aufweist.

8. Freikolbenvorrichtung nach Anspruch 7, **dadurch gekennzeichnet, dass** der Einlassöffnung (86, 88, 90) eine korrespondierende, bezüglich einer Mittellängsebene (L) der Kolbenaufnahme (24) spiegelbildlich dazu ausgerichtete Einlassöffnung (86, 88, 90) zugeordnet ist, und/oder dass mindestens eine weitere Einlassöffnung (88, 90) vorgesehen ist, die auf denselben Bereich (84) des Brennraumes (50) gerichtet ist, der in Umfangsrichtung der Achse (26) einen geringeren Winkelabstand zu der weiteren Einlassöffnung (88, 90) aufweist als die erstgenannte Einlassöffnung (86, 88).

9. Freikolbenvorrichtung nach Anspruch 8, **dadurch gekennzeichnet, dass** ein Volumenstrom an einströmendem Frischgas umso größer ist, je größer der Winkelabstand zwischen der Einlassöffnung (86, 88, 90) und dem Bereich (84) des Brennraumes (50) ist.

10. Freikolbenvorrichtung nach einem der voranstehenden Ansprüche, **dadurch gekennzeichnet, dass** die Einströmeinrichtung (76) einen die Wandung (32) umgebenden Einströmraum (92) umfasst oder bildet, der über eine Zufuhrleitung mit Frischgas beaufschlagbar ist und der über die mindestens eine Einlassöffnung (34, 80, 86, 88, 90) in den Brennraum (50) mündet, insbesondere über die Mehrzahl von Einlassöffnungen (34, 80, 86, 88, 90), und/oder dass die Freikolbenvorrichtung (10) an mindestens einer Einlassöffnung (34) ein Stellorgan aufweist, über das die Einströmrichtung für Frischgas in den Brennraum (50) einstellbar ist.

11. Freikolbenvorrichtung nach einem der voranstehenden Ansprüche, **dadurch gekennzeichnet, dass** die Kolbenaufnahme (24) ein Gehäuse (28) umfasst und eine Kolbenlaufbuchse (30), die in das Gehäuse (28) eingesetzt ist und die Wandung (32) umfasst oder bildet, wobei der Kolben (24) in der Kolbenlaufbuchse (30) hin- und herbewegbar ist und zumindest die mindestens eine Einlassöffnung (34, 80, 86, 88, 90) in der Kolbenlaufbuchse (30) gebildet ist.

12. Freikolbenvorrichtung nach einem der voranstehenden Ansprüche, **dadurch gekennzeichnet, dass** der Kolben (42) zumindest teilweise über die mindestens eine Einlassöffnung (34, 80, 86, 88, 90) bewegbar ist und dass diese bei Einnahme des unteren Totpunktes durch den Kolben (42) zumindest teilweise freigebbar ist.

13. Freikolbenvorrichtung nach einem der voranstehenden Ansprüche, **dadurch gekennzeichnet, dass** die Freikolbenvorrichtung (10) eine weitere Kolbeneinrichtung (40) mit einem Kolben (42) umfasst, wobei die Kolben (42) beider Kolbeneinrichtungen (38, 40) in Gegenkolbenanordnung positioniert sind, wobei der Brennraum (50) zwischen den Kolben (42) gebildet ist, vorzugsweise dass der Kolben (42) in der weiteren Kolbeneinrichtung (38, 40) zumindest teilweise über die mindestens eine Auslassöffnung (36) bewegbar ist und dass diese bei Einnahme des unteren Totpunktes durch den Kolben (42) zumindest teilweise freigebbar ist.

14. Freikolbenvorrichtung nach einem der voranstehenden Ansprüche, **dadurch gekennzeichnet, dass** die Freikolbenvorrichtung (10) eine mit der Kolbeneinrichtung (38) gekoppelte Energiekopplungseinrichtung (58) umfasst, über die Energie der Kolbeneinrichtung (38) auskoppelbar oder über die Energie an die Kolbeneinrichtung (38) einkoppelbar ist, insbesondere dass die Energiekopplungseinrichtung (58) mindestens einen Lineargenerator (66) umfasst.

15. Verfahren zum Betreiben einer Freikolbenvorrichtung, umfassend eine Kolbenaufnahme (24), in der mindestens eine Kolbeneinrichtung (38, 40) mit einem Kolben (42) längs einer Achse (26) hin- und herbeweglich angeordnet ist, wobei die Kolbenaufnahme (24) einen von einer Wandung (32) begrenzten Brennraum (50) umfasst oder bildet, in der mindestens eine Einlassöffnung (34, 80, 86, 88, 90) für die Zufuhr von Frischgas und, in axialer Richtung davon beabstandet, mindestens eine Auslassöffnung (36) für die Abfuhr von Abgas gebildet sind, wobei eine Einströmeinrichtung (78) für Frischgas vorgesehen wird, die die mindestens eine Einlassöffnung (34, 80, 86, 88, 90) aufweist und derart ausgebildet ist, dass in den Brennraum (50) einströmendes Frischgas auf einen axial zur mindestens einen Einlassöffnung (34, 80, 86, 88, 90) in Richtung der mindestens einen Auslassöffnung (36) versetzt angeordneten Anströmbereich (84) im Brennraum (50) gerichtet wird, der außermittig relativ zur Achse (26) angeordnet ist, wobei die Einströmeinrichtung (76) so ausgebildet ist, dass eine walzenförmige Bewegung des einströmenden Frischgases im Brennraum (50) erzielt wird und einströmendes Frischgas um eine quer zur Achse (26) ausgerichtete Wälzachse (100) wälzt, und wobei eine Mehrzahl von in Umlaufrichtung der Achse (26) voneinander beabstandeter Einlassöffnungen (34, 80, 86, 88, 90) vorgesehen ist, die spiegelsymmetrisch zueinander bezüglich einer die Achse (26) enthaltenden Mittellängsebene (L) der Kolbenaufnahme (24) an der Wandung (32) angeordnet und ausgestaltet sind.

## Claims

1. Free piston apparatus, comprising a piston receptacle (24) in which at least one piston device (38, 40) having a piston (42) is arranged so as to be reciprocable along an axis (26), wherein the piston receptacle (24) comprises or forms a combustion chamber (50) delimited by a wall arrangement (32) in which at least one inlet opening (34, 80, 86, 88, 90) for the supply of fresh gas and, spaced apart therefrom in axial direction, at least one outlet opening (36) for the removal of exhaust gas are formed, **characterized in that** the free piston apparatus (10) comprises an inflow device (78) for fresh gas, which has the at least one inlet opening (34, 80, 86, 88, 90) and is configured in such a way that fresh gas flowing into the combustion chamber (50) is directed to an incident flow region (84) in the combustion chamber (50) arranged offset axially to the at least one inlet opening (34, 80, 86, 88, 90) in the direction of the at least one outlet opening (36), which incident flow region (84) is arranged off-center relative to the axis (26), wherein the inflow device (76) is configured such that a tumble-shaped movement of the inflowing fresh gas in the combustion chamber (50) is achievable and inflowing fresh gas rolls about a tumble axis (100) which is aligned transverse to the axis (26), and wherein a plurality of inlet openings (34, 80, 86, 88, 90) spaced apart from each other in circumferential direction of the axis (26) is provided, which are arranged and configured on the wall arrangement (32) so as to be mirror-symmetrical to each other with respect to a central longitudinal plane (L) of the piston receptacle (24) containing the axis.

2. Free piston apparatus in accordance with Claim 1, **characterized in that** the tumble axis (100) is arranged centrally or substantially centrally between the at least one inlet opening (34, 80, 86, 88, 90) and the at least one outlet opening (36).

3. Free piston apparatus in accordance with Claim 1 or 2, **characterized in that** the incident flow region (84) is arranged in axial direction approximately centrally between the at least one inlet opening (34, 80, 86, 88, 90) and the at least one outlet opening (36), or **in that** the incident flow region (84) is arranged upstream of a center between the at least one inlet opening (34, 80, 86, 88, 90) and the at least one outlet opening (36) in the direction of the at least one inlet opening (34, 80, 86, 88, 90).

4. Free piston apparatus in accordance with any one of the preceding Claims, **characterized in that** the at least one inlet opening (34, 80, 86, 88, 90) is configured tilted relative to the axis (26) for achieving an axial movement component of inflowing fresh gas, in particular **in that** a plurality of inlet openings (34, 80, 86, 88, 90) is provided, which are configured tilted relative to the axis (26).

5. Free piston apparatus in accordance with any one of the preceding Claims, **characterized in that** the inlet openings (34, 80, 86, 88, 90) are formed at the same position on the wall arrangement (32) in axial direction.

6. Free piston apparatus in accordance with any one of the preceding Claims, **characterized in that** an inlet opening (80) is provided which is directed radial to the axis (26) and towards a side of the wall arrangement (32) opposite the inlet opening (80), with respect to a section plane transverse to the axis (26), wherein the incident flow region (84) is arranged on the side of the combustion chamber (50) opposite the inlet opening (80), preferably **in that** no inlet opening is formed on the wall arrangement (32) on a side opposite said inlet opening (80), with respect to the axis (26).

7. Free piston apparatus in accordance with any one of the preceding Claims, **characterized in that** an inlet opening (86, 88, 90) is provided which, with respect to a section plane transverse to the axis (26), is not directed radial to the axis (26), but rather to a region (84) of the combustion chamber (50) which has an angular distance to the inlet opening (86, 88, 90) of less than 180° in circumferential direction of the axis (26).

8. Free piston apparatus in accordance with Claim 7, **characterized in that** associated with the inlet opening (86, 88, 90) is a corresponding inlet opening (86, 88, 90) aligned as a mirror image thereto with respect to a central longitudinal plane (L) of the piston receptacle (24) and/or **in that** at least one further inlet opening (88, 90) is provided which is directed to the same region (84) of the combustion chamber (50) which has a smaller angular distance to the further inlet opening (88, 90) in circumferential direction of the axis (26) than the first mentioned inlet opening (86, 88).

9. Free piston apparatus in accordance with Claim 8, **characterized in that** the greater the angular distance between the inlet opening (86, 88, 90) and the region (84) of the combustion chamber (50) is, the greater a volumetric flow of inflowing fresh gas is.

10. Free piston apparatus in accordance with any one of the preceding Claims, **characterized in that** the inflow device (76) comprises or forms an inflow chamber (92) which surrounds the wall arrangement (32) and which is able to be acted upon with fresh gas by way of a supply conduit and which opens into the combustion chamber (50) via the at least one inlet opening (34, 80, 86, 88, 90), in particular via the plurality of inlet openings (34, 80, 86, 88, 90) and/or **in that** the free piston apparatus (10) has an actuator at at least one inlet opening (34), by way of which the inflow direction for fresh gas into the combustion chamber (50) is adjustable.

11. Free piston apparatus in accordance with any one of the preceding Claims, **characterized in that** the piston receptacle (24) comprises a housing (28) and a piston bushing (30) which is inserted into the housing (28) and comprises or forms the wall arrangement (32), wherein the piston (24) is reciprocable in the piston bushing (30) and at least the at least one inlet opening (34, 80, 86, 88, 90) is formed in the piston bushing (30).

12. Free piston apparatus in accordance with any one of the preceding Claims, **characterized in that** the piston (42) is movable at least partially over the at least one inlet opening (34, 80, 86, 88, 90) and **in that** the latter is at least partially unblockable upon the piston (42) adopting the bottom dead center.

13. Free piston apparatus in accordance with any one of the preceding Claims, **characterized in that** the free piston apparatus (10) comprises a further piston device (40) having a piston (42), wherein the pistons (42) of both piston devices (38, 40) are positioned in opposed piston arrangement, wherein the combustion chamber (50) is formed between the pistons (42), preferably **in that** the piston (42) of the further piston device (38, 40) is movable at least partially over the at least one outlet opening (36) and **in that** the latter is at least partially unblockable upon the piston (42) adopting the bottom dead center.

14. Free piston apparatus in accordance with any one of the preceding Claims, **characterized in that** the free piston apparatus (10) comprises an energy coupling device (58) which is coupled to the piston device (38) and by way of which energy is able to be decoupled from the piston device (38) or by way of which energy is able to be coupled into the piston device (38), in particular **in that** the energy coupling device (58) comprises at least one linear generator (66).

15. Method for operating a free piston apparatus, comprising a piston receptacle (24) in which at least one piston device (38, 40) having a piston (42) is arranged so as to be reciprocable along an axis (26), wherein the piston receptacle (24) comprises or forms a combustion chamber (50) delimited by a wall arrangement (32) in which at least one inlet opening (34, 80, 86, 88, 90) for the supply of fresh gas and, spaced apart therefrom in axial direction, at least one outlet opening (36) for the removal of exhaust gas are formed, wherein an inflow device (78) for fresh gas is provided, which has the at least one inlet opening (34, 80, 86, 88, 90) and is configured in such a way that fresh gas flowing into the combustion chamber (50) is directed to an incident flow region (84) in the combustion chamber (50) arranged offset axially to the at least one inlet opening (34, 80, 86, 88, 90) in the direction of the at least one outlet opening (36), which incident flow region (84) is arranged off-center relative to the axis (26), wherein the inflow device (76) is configured such that a tumble-shaped movement of the inflowing fresh gas in the combustion chamber (50) is achievable and inflowing fresh gas rolls about a tumble axis (100) which is aligned transverse to the axis (26), wherein a plurality of inlet openings (34, 80, 86, 88, 90) spaced apart from each other in circumferential direction of the axis (26) is provided, which are arranged and configured on the wall arrangement (32) so as to be mirror-symmetrical to each other with respect to a central longitudinal plane (L) of the piston receptacle (24) containing the axis.

## Revendications

1. Dispositif de piston libre, comprenant un logement de piston (24) dans lequel au moins un équipement de piston (38, 40) avec un piston (42) est agencé mobile en va-et-vient le long d'un axe (26), dans lequel le logement de piston (24) comprend ou forme une chambre de combustion (50) délimitée par une paroi (32), dans laquelle sont formés au moins un orifice d'entrée (34, 80, 86, 88, 90) pour l'amenée de gaz frais et, espacé de là dans la direction axiale, au moins un orifice de sortie (36) pour l'évacuation de gaz d'échappement, **caractérisé en ce que** le dispositif de piston libre (10) comprend un équipement d'écoulement (78) pour un gaz frais qui présente le au moins un orifice d'entrée (34, 80, 86, 88, 90) et est conçu de telle sorte qu'un gaz frais s'écoulant jusque dans la chambre de combustion (50) soit orienté vers une zone d'afflux (84) dans la chambre de combustion (50) agencée de façon axiale par rapport à au moins un orifice d'entrée (34, 80, 86, 88, 90) et en décalage dans la direction du au moins un orifice de sortie (36), laquelle zone d'afflux est agencée de façon excentrée par rapport à l'axe (26), dans lequel l'équipement d'écoulement (76) est conçu de telle sorte qu'un mouvement en forme de rouleau du gaz frais s'écoulant dans la chambre de combustion (50) puisse être obtenu et un gaz frais s'écoulant tourne autour d'un axe tournant (100) orienté transversalement à l'axe (26), et dans lequel est prévue une pluralité d'orifices d'entrée (34, 80, 86, 88, 90) espacés les uns des autres dans la direction périphérique de l'axe (26) qui sont conçus et agencés contre la paroi (32) en symétrie spéculaire les uns par rapport aux autres relativement à un plan longitudinal médian (L) du logement de piston (24) contenant l'axe.

2. Dispositif de piston libre selon la revendication 1, **caractérisé en ce que** l'axe tournant (100) est agencé de façon centrée ou essentiellement centrée entre le au moins un orifice d'entrée (34, 80, 86, 88, 90) et le au moins un orifice de sortie (36).

3. Dispositif de piston libre selon la revendication 1 ou 2, **caractérisé en ce que** la zone d'afflux (84) est agencée dans la direction axiale environ de façon centrée entre le au moins un orifice d'entrée (34, 80, 86, 88, 90) et le au moins un orifice de sortie (36) ou **en ce que** la zone d'afflux (84) est disposée en amont d'un milieu entre le au moins un orifice d'entrée (34, 80, 86, 88, 90) et le au moins un orifice de sortie (36) dans la direction du au moins un orifice d'entrée (34, 80, 86, 88, 90).

4. Dispositif de piston libre selon l'une des revendications précédentes, **caractérisé en ce que** le au moins un orifice d'entrée (34, 80, 86, 88, 90) est conçu de façon inclinée par rapport à l'axe (26) pour obtenir une composante de mouvement axiale d'un gaz frais s'écoulant, en particulier **en ce qu'**est prévue une pluralité d'orifices d'entrée (34, 80, 86, 88, 90) qui sont conçus de façon inclinée par rapport à l'axe (26).

5. Dispositif de piston libre selon l'une des revendications précédentes, **caractérisé en ce que** les orifices d'entrée (34, 80, 86, 88, 90) sont formés dans la direction axiale contre la même position contre la paroi (32).

6. Dispositif de piston libre selon l'une des revendications précédentes, **caractérisé en ce qu'**est prévu un orifice d'entrée (80) qui, par rapport à un plan de coupe de façon transversale à l'axe (26), est orienté radialement vers l'axe (26) et un côté de la paroi (32) opposé à l'orifice d'entrée (80), dans lequel la zone d'afflux (84) est agencée sur le côté de la chambre de combustion (50) opposé à l'orifice d'entrée (80), de préférence **en ce qu'**aucun orifice d'entrée n'est formé contre la paroi (32) contre un côté opposé à cet orifice d'entrée (80) par rapport à l'axe (26).

7. Dispositif de piston libre selon l'une des revendications précédentes, **caractérisé en ce qu'**est prévu un orifice d'entrée (86, 88, 90) qui, par rapport à un plan de coupe de façon transversale à l'axe (26), est orienté non pas radialement vers l'axe (26), mais vers une zone (84) de la chambre de combustion (50) qui présente dans la direction périphérique de l'axe (26) une distance angulaire avec l'orifice d'entrée (86, 88, 90) de moins de 180°.

8. Dispositif de piston libre selon la revendication 7, **caractérisé en ce qu'**à l'orifice d'entrée (86, 88, 90) est attribué un orifice d'entrée (86, 88, 90) correspondant, orienté en miroir par rapport à lui relativement à un plan longitudinal médian (L) du logement de piston (24), et/ou **en ce qu'**est prévu au moins un autre orifice d'entrée (88, 90) qui est orienté vers la même zone (84) de la chambre de combustion (50) qui présente dans la direction périphérique de l'axe (26) une distance angulaire avec l'autre orifice d'entrée (88, 90) moindre que celle avec l'orifice d'entrée (86, 88) nommé en premier.

9. Dispositif de piston libre selon la revendication 8, **caractérisé en ce qu'**un débit volumique en gaz frais s'écoulant est d'autant plus grand que la distance angulaire entre l'orifice d'entrée (86, 88, 90) et la zone (84) de la chambre de combustion (50) est grande.

10. Dispositif de piston libre selon l'une des revendications précédentes, **caractérisé en ce que** l'équipement d'écoulement (76) comprend ou forme une chambre d'écoulement (92) entourant la paroi (32), laquelle chambre d'écoulement peut être sollicitée avec un gaz frais via une conduite d'amenée et qui débouche dans la chambre de combustion (50) via le au moins un orifice d'entrée (34, 80, 86, 88, 90), en particulier via la pluralité d'orifices d'entrée (34, 80, 86, 88, 90) et/ou **en ce que** le dispositif de piston libre (10) présente contre au moins un orifice d'entrée (34) un organe de réglage via lequel la direction d'écoulement pour un gaz frais peut être réglée dans la chambre de combustion (50).

11. Dispositif de piston libre selon l'une des revendications précédentes, **caractérisé en ce que** le logement de piston (24) comprend un carter (28) et une douille de glissement de piston (30) qui est mise en place dans le carter (28) et comprend ou forme la paroi (32), dans lequel le piston (24) peut être déplacé en va-et-vient dans la douille de glissement de piston (30) et au moins le au moins un orifice d'entrée (34, 80, 86, 88, 90) est formé dans la douille de glissement de piston (30).

12. Dispositif de piston libre selon l'une des revendications précédentes, **caractérisé en ce que** le piston (42) peut être déplacé au moins partiellement via le au moins un orifice d'entrée (34, 80, 86, 88, 90) et **en ce que** celui-ci peut être dégagé au moins partiellement lors de la prise du point mort inférieur par le piston (42).

13. Dispositif de piston libre selon l'une des revendications précédentes, **caractérisé en ce que** le dispositif de piston libre (10) comprend un autre équipement de piston (40) avec un piston (42), dans lequel les pistons (42) des deux équipements de piston (38, 40) sont positionnés dans un agencement de contre-piston, dans lequel la chambre de combustion (50) est formée entre les pistons (42), de préférence **en ce que** le piston (42) dans l'autre équipement de piston (38, 40) peut être déplacé au moins partiellement via le au moins un orifice de sortie (36) et **en ce que** celui-ci peut être dégagé au moins partiellement lors de la prise du point mort inférieur par le piston (42).

14. Dispositif de piston libre selon l'une des revendications précédentes, **caractérisé en ce que** le dispositif de piston libre (10) comprend un équipement de couplage d'énergie (58) couplé à l'équipement de piston (38), par lequel l'énergie peut être découplé de l'équipement de piston (38) ou par lequel l'énergie peut être couplé à l'équipement de piston (38), en particulier **en ce que** l'équipement de couplage d'énergie (58) comprend au moins un générateur linéaire (66).

15. Procédé destiné à exploiter un dispositif de piston libre, comprenant un logement de piston (24) dans lequel au moins un équipement de piston (38, 40) avec un piston (42) est agencé mobile en va-et-vient le long d'un axe (26), dans lequel le logement de piston (24) comprend ou forme une chambre de combustion (50) délimitée par une paroi (32), dans laquelle sont formés au moins un orifice d'entrée (34, 80, 86, 88, 90) pour l'amenée de gaz frais et, espacé de là dans la direction axiale, au moins un orifice de sortie (36) pour l'évacuation de gaz d'échappement, dans lequel est prévu un équipement d'écoulement (78) pour un gaz frais qui présente le au moins un orifice d'entrée (34, 80, 86, 88, 90) et est conçu de telle sorte qu'un gaz frais s'écoulant jusque dans la chambre de combustion (50) est orienté vers une zone d'afflux (84) dans la chambre de combustion (50) agencée de façon axiale par rapport à au moins un orifice d'entrée (34, 80, 86, 88, 90) et en décalage dans la direction du au moins un orifice de sortie (36), laquelle zone d'afflux est agencée de façon excentrée par rapport à l'axe (26), dans lequel l'équipement d'écoulement (76) est conçu de telle sorte qu'un mouvement en forme de rouleau du gaz frais s'écoulant dans la chambre de combustion (50) soit obtenu et un gaz frais s'écoulant tourne autour d'un axe tournant (100) orienté transversalement à l'axe (26), et dans lequel est prévue une pluralité d'orifices d'entrée (34, 80, 86, 88, 90) espacés les uns des autres dans la direction périphérique de l'axe (26), qui sont conçus et agencés contre la paroi (32) en symétrie spéculaire les uns par rapport aux autres relativement à un plan longitudinal médian (L) du logement de piston (24) contenant l'axe (26).
